# EUROPÄISCHE PATENTSCHRIFT

(11) **EP 3 694 751 B1**
(45) Veröffentlichungstag und Bekanntmachung des Hinweises auf die Patenterteilung: **22.09.2021**
(21) Anmeldenummer: 18786256.0
(22) Anmeldetag: 08.10.2018
(51) Int. Cl.: B60R 22/48

(54) **GURTSCHLOSSSYSTEM**
BUCKLE SYSTEM
SYSTÈME DE BOUCLE DE CEINTURE DE SÉCURITÉ

(30) Priorität: 11.10.2017 DE 102017123640
(43) Veröffentlichungstag der Anmeldung: 19.08.2020
(73) Patentinhaber: Autoliv Development AB, 447 83 Vårgårda (SE)
(72) Erfinder: OTS, Aidu, 76505 Saue Sity (EE); MELNIKOVA, Larissa, 12911 Tallinn (EE); SCHARNBERG, Ole, 22417 Hamburg (DE); RUCHHÖFT, Stephan, 25335 Elmshorn (DE)
(74) Vertreter: Berkenbrink, Kai-Oliver
(86) Internationale Anmeldenummer: PCT/EP2018/077287
(87) Internationale Veröffentlichungsnummer: WO 2019/072748

(56) Entgegenhaltungen:
- EP-A1- 2 189 372
- WO-A1-98/29283
- WO-A1-2009/008949

## Beschreibung

Die Erfindung betrifft ein Gurtschlosssystem, welches ein Gurtschloss und eine Schosszunge umfasst, die in das Gurtschloss einsteckbar ist.

Es ist bekannt, dass in dem Gurtschloss ein Schalter angeordnet ist, mit dem das Einstecken einer Schlosszunge in das Gurtschloss erfassbar ist. Aufgrund dieses Schalters ist es möglich, dass der Fahrer eine optische und/oder akustische Warnung erhält, wenn er nicht angeschnallt ist. Es hat sich gezeigt, dass einige Fahrer zur Vermeidung der Warnung eine Fake-Zunge oder auch die Schlosszunge des Beifahrers in das Gurtschloss einstecken. Ein solches Verhalten ist sehr gefährlich. Darüber hinaus wird das Signal des Gurtschlossschalters häufig für den Nachweis verwendet, dass eine Person auf dem Fahrersitz vorhanden ist, wodurch bestimmte Funktionen des Fahrzeuges aktiviert sein können. Es besteht daher das Bedürfnis, dass eine Warnung auch dann ausgegeben werden kann, wenn eine dem Gurtschloss nicht zugeordnete Schlosszunge in das Gurtschloss eingesteckt ist.

Aus DE 10 2006 055 141 A1 ist ein Gurtschlosssystem mit einem Schalter in dem Gurtschloss bekannt. Der Gurtschlossschalter ist mit einem HF-Identifikationstag verbunden, dessen emittierbares Kennungssignal aufgrund des Schaltzustandes des Gurtschlossschalters geändert wird, so dass über den HF-Identifikationstag der Zustand des Gurtschlosses kabellos an die Fahrzeugsteuerung übertragen werden kann. Allerdings schließt die Verwendung eines solchen HF-Identifikationstags in Kombination mit einem Gurtschlossschalter nicht aus, dass eine dem Gurtschloss eigentlich nicht zugehörige Schlosszunge zur Änderung des von dem HF-Identifikationstag erfassten Zustands verwendet wird. Aus EP 2 189 372 A1 ist daher ein Gurtschlosssystem mit den Merkmalen des Oberbegriffs des Anspruchs 1 bekannt. Ein solcher RFID-Transponder ist aber aufwändig in der Platine zu montieren.

Aufgabe der vorliegenden Erfindung ist es daher, die mit Bezug zum Stand der Technik geschilderten Nachteile zu beheben und insbesondere ein Gurtschlosssystem anzugeben, dessen Schlosszunge einfacher zu montieren ist.

Gelöst wird die Aufgabe durch ein Gurtschlosssystem mit den Merkmalen des unabhängigen Anspruchs. Vorteilhafte Weiterbildungen des Gurtschlosssystems sind in den abhängigen Ansprüchen und in der Beschreibung angegeben, wobei einzelne Merkmale der vorteilhaften Weiterbildungen in technisch sinnvoller Weise beliebig miteinander kombinierbar sind.

Gelöst wird die Aufgabe insbesondere durch ein Gurtschlosssystem mit den eingangs genannten Merkmalen, bei dem in oder an der Schlosszunge ein RFID-Transponder so angeordnet ist und in dem Gurtschloss eine RFID-Leseeinheit so angeordnet und ausgebildet ist, dass eine Kopplung zwischen der RFID-Leseeinheit und dem RFID-Transponder ausschließlich dann möglich ist, wenn die Schlosszunge in das Gurtschloss eingesteckt ist.

Da auf dem RFID-Transponder ein die jeweilige Schlosszunge kennzeichnender Code gespeichert werden kann und dieser drahtlos durch die RFID-Leseeinheit ausgelesen werden kann, kann sichergestellt werden, dass nur die dem entsprechenden Gurtschloss zugehörige Schlosszunge im eingesteckten Zustand auch als solche identifiziert wird. Die RFID-Technologie ist als solche hinlänglich bekannt. Der RFID-Transponder, der auch als Etikett oder Chip bezeichnet wird, wird über ein von der RFID-Leseeinheit erzeugtes elektromagnetisches Feld aktiviert und mit Energie versorgt. Nach der Aktivierung sendet der Transponder die auf ihm gespeicherten Informationen an das Lesegerät. Die sogenannte Nahfeldkommunikation (Near Field Communication, abgekürzt NFC) ist eine Untergruppe der RFID-Technologie, wobei durch die Near Field Communication ein Übertragungsstandard definiert ist.

Um sicherzustellen, dass eine Kopplung von Transponder und Leseeinheit nicht auch dann erfolgen kann, wenn die Schlosszunge nicht in das Gurtschloss eingesteckt ist und nur außerhalb des Gurtschlosses angeordnet ist, können unterschiedliche Maßnahmen ergriffen werden.

So kann der RFID-Transponder beispielsweise in oder an einem in das Gurtschloss einsteckbaren Abschnitt der Schlosszunge angeordnet sein. Im eingesteckten und insbesondere auch verriegelten Zustand ist der RFID-Transponder also unmittelbar in dem Gurtschloss angeordnet und insbesondere mit einem sehr geringen Abstand zu der Leseeinheit des Gurtschlosses angeordnet. Im eingesteckten beziehungsweise verriegelten Zustand ist dieser Abstand beispielsweise nicht größer als 3 cm (Zentimeter), bevorzugt nicht größer als 1 cm und besonders bevorzugt nicht größer als 0,5 cm.

Eine solche Anordnung kann beispielsweise dadurch erreicht werden, dass der RFID-Transponder in oder an einer aus Metall bestehenden Platine der Schlosszunge angeordnet ist. In der Regel weisen Schlosszungen einen Platinenkörper aus Metall auf, dessen in dem angeschnallten Zustand außerhalb des Gurtschlosses angeordneter Bereich von einer Umspritzung aus Kunststoff umgeben ist.

Der RFID-Transponder kann in einer nicht vollständig durch die Platine durchgehenden Ausnehmung beispielsweise in der Art eines Sackloches angeordnet sein. Somit ist auch sichergestellt, dass von dem RFID-Transponder emittierte Strahlung in Richtung der Öffnung der Ausnehmung beziehungsweise des Sackloches gerichtet ist. In die gegenüberliegende Richtung (durch das Metall hindurch) kann die Strahlung hingegen zumindest nicht ungeschwächt gelangen.

Auf diese Weise kann auch sichergestellt werden, dass eine Kopplung des RFID-Transponders mit der RFID-Leseeinheit nur dann stattfinden kann, wenn die Schlosszunge mit einer vorgegebenen Orientierung in das Gurtschloss eingesteckt ist, insbesondere dann, wenn der auf einer Seite der Platine angeordnete RFID-Transponder der in dem Gurtschloss angeordneten RFID-Leseeinheit zugewandt ist.

Um sicherzustellen, dass der RFID-Transponder im angeschnallten Zustand auch innerhalb des Gurtschlosses angeordnet ist, kann der RFID-Transponder in oder an einem Abschnitt der aus Kunststoff bestehenden Umspritzung der Schlosszunge angeordnet sein, wobei sich der Abschnitt im eingesteckten Zustand der Schlosszunge bis in das Gurtschloss erstreckt. Der RFID-Transponder kann in den Abschnitt der Umspritzung eingebettet sein, kann aber auch auf den entsprechenden Abschnitt der Umspritzung aufgebracht, beispielsweise aufgeklebt sein.

Zur Vereinfachung der Montage der Schlosszunge ist vorgesehen, dass der RFID-Transponder zur Halterung (insbesondere zur Vorfixierung) an einer aus Metall bestehenden Platine der Schlosszunge und zur Beabstandung zu der Platine in einem aus Kunststoff bestehenden Gehäuse angeordnet ist.

Insbesondere zur Vorfixierung des den RFID-Transponder tragenden Gehäuses kann vorgesehen sein, dass das Gehäuse kraft- und/oder formschlüssig an der Platine, insbesondere mittels einer Rastverbindung festlegbar ist. Hierzu kann das Gehäuse beispielsweise Rasthaken aufweisen, die durch ein Durchgangsloch in der Platine hindurchgesteckt werden und die in dem eingesteckten Zustand das Gehäuse und somit auch den RFID-Transponder in ihrer Position (vor-)fixieren.

Zudem kann vorgesehen sein, dass das zunächst an der Platine vorfixierte Gehäuse von einer aus Kunststoff bestehenden Umspritzung der Schlosszunge zumindest teilweise umgeben ist. Durch das zumindest teilweise Umspritzen des Gehäuses kann das Gehäuse und somit der RFID-Transponder unverlierbar an der Platine fixiert werden. In diesem Zusammenhang ist insbesondere bevorzugt, wenn zur Vermeidung von Spannungen der Kunststoff des Gehäuses und der Kunststoff der Umspritzung aus dem gleichen Material bestehen.

Mit der Verwendung eines aus Kunststoff bestehenden Gehäuses kann somit zunächst eine elektrisch leitende Verbindung zwischen dem RFID-Transponder und der Platine verhindert werden, während gleichzeitig der RFID-Transponder an der Platine (vor-)fixiert werden kann. Demgemäß wird aber auch ein Verfahren zur Herstellung einer Schlosszunge vorgeschlagen, bei dem zunächst ein RFID-Transponder aufweisendes Gehäuse aus Kunststoff an einer aus Metall bestehenden Platine form- und/oder kraftschlüssig vorfixiert wird und anschließend von einer ebenfalls aus Kunststoff bestehenden Umspritzung zumindest teilweise umspritzt wird.

Um sicherzustellen, dass eine Kopplung des RFID-Transponders mit der RFID-Leseeinheit nur bei in das Gurtschloss eingesteckter Schlosszunge erfolgt, kann vorgesehen sein, dass die maximale Sendeleistung der RFID-Leseeinheit so gering ist, dass eine Kopplung mit dem RFID-Transponder nur möglich ist, wenn der Abstand zwischen RFID-Transponder und RFID-Leseeinheit weniger als 3 cm, bevorzugt weniger als 1 cm, ganz besonders bevorzugt weniger als 0,5 cm beträgt.

Das Vermeiden einer Kopplung bei nicht eingesteckter Schlosszunge kann aber auch durch bauliche Maßnahmen am Gurtschloss erreicht werden. So kann das Gurtschloss so ausgebildet sein, dass die von der RFID-Leseeinheit oder dem RFID-Transponder emittierte Strahlung in mindestens einer Richtung zumindest geschwächt wird, sodass bei von außen an das Gurtschloss gehaltener Schlosszunge eine Kopplung von RFID-Transponder und RFID-Leseeinheit nicht möglich ist. Beispielsweise kann die RFID-Leseeinheit so mit seiner Abstrahlcharakteristik ausgelegt sein und/oder der RFID-Transponder mit seiner Abstrahlcharakteristik so ausgelegt sein, dass eine Kopplung nur möglich ist, wenn die Schlosszunge in das Gurtschloss eingesteckt ist. In diesem Fall wäre es sogar denkbar, dass der RFID-Transponder in einem Bereich der Schlosszunge angeordnet ist, der bei eingesteckter Schlosszunge außerhalb des Gurtschlosses angeordnet ist.

Solch konstruktive Maßnahmen können insbesondere durch mindestens ein Abschirmblech erreicht werden, das in dem Gurtschloss angeordnet ist. Eine solche Abschirmung kann aber auch durch entsprechende Anordnung der in einem Gurtschloss normalerweise befindlichen Blechteile erfolgen.

Wenn über die RFID-Leseeinheit nicht nur die Identifikation der dem Gurtschloss zugeordneten Schlosszunge möglich ist, sondern wenn aufgrund der Auslegung des Gurtschlosses und der Gurtzunge auch mittels der RFID-Leseeinheit festgestellt werden kann, dass die Schlosszunge in das Gurtschloss eingesteckt ist, kann auf einen zusätzlichen Schalter oder Sensor zur Detektion der in das Gurtschloss eingesteckten Schlosszunge verzichtet werden.

Damit die RFID-Leseeinheit einen herkömmlichen Schalter einfach ersetzen kann, ist diese so eingerichtet, dass die RFID-Leseeinheit bei Kopplung mit dem RFID-Transponder ein diskretes Signal beispielsweise einen Strom von einigen Milliampere ausgibt. In ungekoppeltem Zustand gibt die RFID-Leseeinheit hingegen ein anderes diskretes Signal aus.

Alternativ kann aber auch vorgesehen sein, dass die RFID-Leseeinheit an ein fahrzeugseitiges BUS-System anschließbar ist.

Die Erfindung sowie das technische Umfeld werden im Folgenden anhand der Figuren beispielhaft erläutert. Es zeigen schematisch
- Figur 1:: ein Gurtschlosssystem im abgeschnallten Zustand,
- Figur 2:: das Gurtschlosssystem im angeschnallten Zustand mit in das Gurtschloss eingesteckter Schlosszunge,
- Figur 3:: das Gurtschlosssystem im angeschnallten Zustand ohne Gehäuse des Gurtschlosses,
- Figur 4:: eine weitere Ausführungsform einer Schlosszunge,
- Figur 5:: eine teilweise Querschnittsansicht durch ein Gurtschloss bei eingesteckter Schlosszunge,
- Figur 6:: eine Detailansicht der Darstellung der Figur 5,
- Figur 7:: eine Platine einer Schlosszunge vor der Montage mit einem einen RFID-Transponder aufweisenden Gehäuse und
- Figur 8:: die die Platine und RFID-Transponder gemäß Figur 7 aufweisende Schlosszunge.

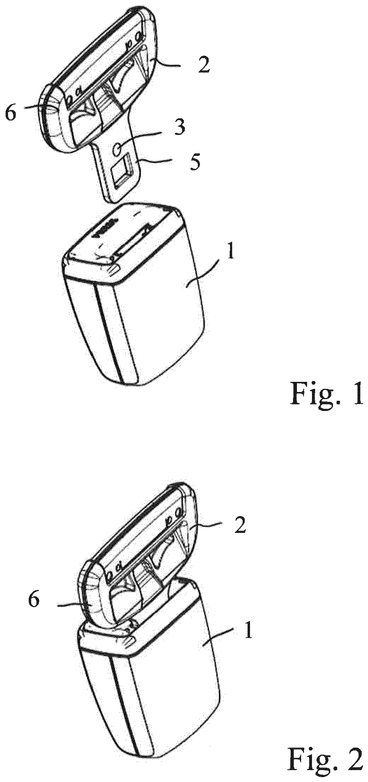

Das in den Figuren 1 bis 3 sowie 5 und 6 dargestellte Gurtschlosssystem umfasst ein Gurtschloss 1 und eine Schlosszunge 2. Die Schlosszunge 2 weist eine aus Metall bestehende Platine 5 und eine die Platine 5 teilweise umgebende Umspritzung 6 aus Kunststoff auf. In dem im angeschnallten Zustand in das Gurtschloss 1 eingesteckten Abschnitt der Platine 5 ist ein Sackloch ausgebildet, in dem ein RFID-Transponder 3 befestigt ist.

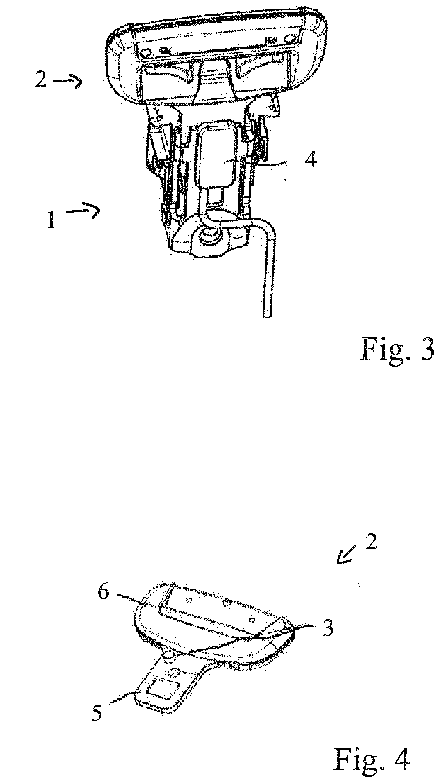

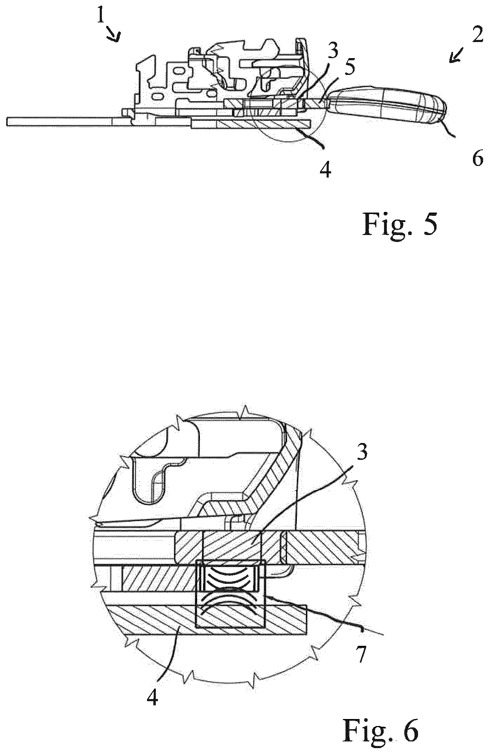

In den Figuren 3, 5 und 6 ist das Gurtschlosssystem im eingesteckten Zustand der Schlosszunge 2 gezeigt, wobei die Schlosszunge 2 in dem Gurtschloss 1 verriegelt ist. Das Gehäuse des Gurtschlosses 1 ist allerdings nicht dargestellt. Es ist zu erkennen, dass in dem Gurtschloss 1 eine RFID-Leseeinheit 4 angeordnet ist. Der in dem Sackloch in der Platine 5 angeordnete RFID-Transponder 3 ist auf der der RFID-Leseeinheit 4 zugewandten Seite der Platine 5 angeordnet (siehe Figuren 5 und 6). Aufgrund der geringen Sendeleistung der RFID-Leseeinheit 4 und des geringen Abstands zu dem RFID-Transponder 3 im eingesteckten Zustand kann eine Kopplung zwischen den beiden nur stattfinden, wenn die Schlosszunge 2 in das Gurtschloss 1 mit der richtigen Orientierung eingesteckt ist und sich der RFID-Transponder 3 und die RFID-Leseeinheit 4 in einem Kopplungsbereich 7 zueinander befinden. Da auf dem RFID-Transponder 3 eine die Schlosszunge 2 identifizierende Identifikationsnummer hinterlegt ist, kann die RFID-Leseeinheit 4 feststellen, ob die dem Gurtschloss 1 zugeordnete Schlosszunge 2 in das Gurtschloss 1 eingesteckt ist. Da eine Kopplung nur in der gezeigten Ausrichtung der Schlosszunge 2 möglich ist, kann eine elektromagnetische Kopplung zwischen RFID-Transponder 3 und RFID-Leseeinheit 4 auch nur stattfinden, wenn die Schlosszunge 2 mit der richtigen Orientierung in das Gurtschloss 1 eingesteckt ist.

In Figur 4 ist eine alternative Ausführungsform der Schlosszunge 2 gezeigt, bei der der RFID-Transponder 2 auf der Platine 5 angeordnet ist.

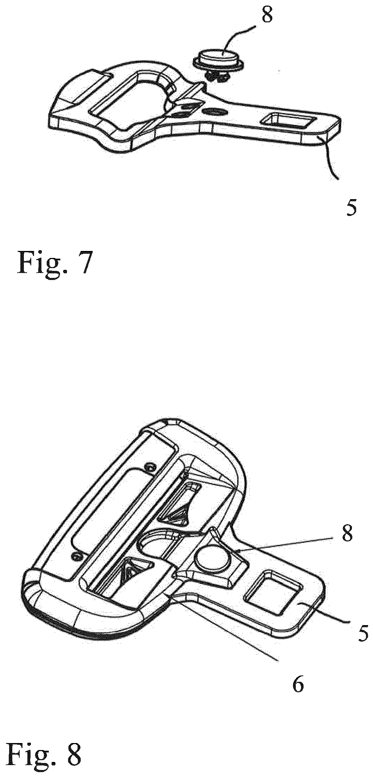

In Figur 7 sind eine Platine einer Schlosszunge und ein Gehäuse 8 dargestellt. In dem Gehäuse 8 ist ein RFID-Transponder integriert. Das Gehäuse 8 weist Rasthaken auf, die zur formschlüssigen Verbindung mit der Platine 5 in ein Durchgangsloch in der Platine 5 eingesteckt werden können.

Nachdem das Gehäuse 8 durch Verrasten mit der Platine 5 an der Platine 5 vorfixiert ist, wird eine Umspritzung 6 aus Kunststoff ausgebildet, wobei die Umspritzung 6 das Gehäuse 8 zumindest teilweise umgibt und somit das Gehäuse 8 und den darin angeordneten RFID-Transponder an der Platine 5 abschließend fixiert.

### Bezugszeichenliste

- 1: Gurtschloss
- 2: Schlosszunge
- 3: RFID-Transponder
- 4: RFID-Leseeinheit
- 5: Platine
- 6: Umspritzung
- 7: Kopplungsbereich
- 8: Gehäuse

## Patentansprüche

1. Gurtschlosssystem, umfassend ein Gurtschloss (1) und eine Schlosszunge (2), die in das Gurtschloss (1) einsteckbar ist, wobei in oder an der Schlosszunge (2) ein RFID-Transponder (3) so angeordnet ist und in dem Gurtschloss (1) eine RFID-Leseeinheit (4) so angeordnet und ausgebildet ist, dass eine Kopplung zwischen der RFID-Leseeinheit (4) und dem RFID-Transponder (3) ausschließlich dann möglich ist, wenn die Schlosszunge (2) in das Gurtschloss (1) eingesteckt ist, **dadurch gekennzeichnet, dass** der RFID-Transponder (3) zur Halterung an einer aus Metall bestehenden Platine (5) der Schlosszunge (2) und zur Beabstandung zu der Platine (5) in einem aus Kunststoff bestehenden Gehäuse (8) angeordnet ist.

2. Gurtschlosssystem nach Anspruch 1, wobei der RFID-Transponder (3) so in oder an der Schlosszunge (2) angeordnet ist und die RFID-Leseeinheit (4) so in dem Gurtschloss (1) angeordnet und ausgebildet ist, dass eine Kopplung zwischen der RFID-Leseeinheit (4) und dem RFID-Transponder (3) nur möglich ist, wenn die Schlosszunge (2) mit einer durch die Anordnung des RFID-Transponders (3) vorgegebenen Orientierung in das Gurtschloss (1) eingesteckt ist.

3. Gurtschlosssystem nach Anspruch 1 oder 2, wobei der RFID-Transponder (3) in oder an einem in das Gurtschloss (1) einsteckbaren Abschnitt der Schlosszunge (2) angeordnet ist.

4. Gurtschlosssystem nach Anspruch 3, wobei der RFID-Transponder (3) in oder an einer aus Metall bestehenden Platine (5) der Schlosszunge (2) angeordnet ist, insbesondere in einem in der Platine (5) ausgebildeten Sackloch.

5. Gurtschlosssystem nach Anspruch 3, wobei der RFID-Transponder (3) in oder an einem Abschnitt einer aus Kunststoff bestehenden Umspritzung (6) der Schlosszunge (2) angeordnet ist, der sich im eingesteckten Zustand bis in das Gurtschloss (1) erstreckt.

6. Gurtschlosssystem nach einem der vorhergehenden Ansprüche, wobei das Gehäuse (8) kraft- und/oder formschlüssig an der Platine (5), insbesondere mittels einer Rastverbindung festlegbar ist.

7. Gurtschlosssystem nach einem der vorhergehenden Ansprüche, wobei das Gehäuse (8) von einer aus Kunststoff bestehenden Umspritzung (6) der Schlosszunge (2) zumindest teilweise umspritzt ist.

8. Gurtschlosssystem nach einem der vorhergehenden Ansprüche, wobei die Sendeleistung der RFID-Leseeinheit (4) so gering ist, dass eine Kopplung mit dem RFID-Transponder (3) nur in einem Abstand bis zu 3 cm möglich ist.

9. Gurtschlosssystem nach einem der vorhergehenden Ansprüche, wobei das Gurtschloss (1) so ausgebildet ist, dass die von der RFID-Leseeinheit (4) oder dem RFID-Transponder (3) emittierte Strahlung in mindestens eine Richtung zumindest geschwächt wird, so dass bei von außen an das Gurtschloss (1) gehaltener Schlosszunge (2) eine Kopplung von RFID-Transponder (3) und RFID-Leseeinheit (4) nicht möglich ist.

10. Gurtschlosssystem nach Anspruch 9, wobei in dem Gurtschloss (1) mindestens ein Abschirmblech angeordnet ist.

11. Gurtschlosssystem nach einem der vorhergehenden Ansprüche, wobei die RFID-Leseeinheit (4) bei Kopplung mit dem RFID-Transponder (3) ein diskretes Signal ausgibt.

12. Gurtschlosssystem nach einem der Ansprüche 1 bis 10, wobei die RFID-Leseeinheit (4) an ein fahrzeugseitiges BUS-System anschließbar ist.

13. Gurtschlosssystem nach einem der vorhergehenden Ansprüche, wobei kein zusätzlicher Schalter oder Sensor zur Detektion der in das Gurtschloss (1) eingesteckten Schlosszunge (2) vorgesehen ist.

## Claims

1. Buckle system, comprising a buckle (1) and a buckle tongue (2) which can be inserted into the buckle (1), an RFID transponder (3) being arranged in or on the buckle tongue (2) and an RFID reader unit (4) being arranged in the buckle (1) and designed in such away that coupling between the RFID reader unit (4) and the RFID transponder (3) is only possible when the buckle tongue (2) is inserted into the buckle (1), **characterized in that** the RFID transponder (3) is arranged in a housing (8) made of plastics material so as to be held on a metal plate (5) of the buckle tongue (2) and so as to be spaced apart from the plate (5).

2. Buckle system according to claim 1, wherein the RFID transponder (3) is arranged in or on the buckle tongue (2) and the RFID reader unit (4) is arranged in the buckle (1) and designed in such a way that coupling between the RFID reader unit (4) and the RFID transponder (3) is only possible when the buckle tongue (2) is inserted into the buckle (1) with an orientation predetermined by the arrangement of the RFID transponder (3).

3. Buckle system according to either claim 1 or claim 2, wherein the RFID transponder (3) is arranged in or on a portion of the buckle tongue (2), which portion can be inserted into the buckle (1).

4. Buckle system according to claim 3, wherein the RFID transponder (3) is arranged in or on a metal plate (5) of the buckle tongue (2), in particular in a blind hole formed in the plate (5).

5. Buckle system according to claim 3, wherein the RFID transponder (3) is arranged in or on a portion of an encapsulation (6) of the buckle tongue (2) made of plastics material, which portion, when inserted, extends into the buckle (1).

6. Buckle system according to any of the preceding claims, wherein the housing (8) can be fixed to the plate (5) in a force-locked and/or form-locked manner, in particular by means of an engagement connection.

7. Buckle system according to any of the preceding claims, wherein the housing (8) is at least partially encapsulated by an encapsulation (6) of the buckle tongue (2) made of plastics material.

8. Buckle system according to any of the preceding claims, wherein the transmission power of the RFID reader unit (4) is so low that coupling with the RFID transponder (3) is only possible at a distance of up to 3 cm.

9. Buckle system according to any of the preceding claims, wherein the buckle (1) is designed such that the radiation emitted by the RFID reader unit (4) or by the RFID transponder (3) in at least one direction is at least weakened, such that coupling of the RFID transponder (3) and the RFID reader unit (4) is not possible when the buckle tongue (2) is held on the buckle (1) from the outside.

10. Buckle system according to claim 9, wherein at least one shielding panel is arranged in the buckle (1).

11. Buckle system according to any of the preceding claims, wherein the RFID reader unit (4) outputs a discrete signal when coupled to the RFID transponder (3).

12. Buckle system according to any of claims 1 to 10, wherein the RFID reader unit (4) can be connected to an on-board BUS system.

13. Buckle system according to any of the preceding claims, wherein no additional switch or sensor is provided for detecting that the buckle tongue (2) is inserted into the buckle (1).

## Revendications

1. Système de boucle de ceinture de sécurité, comprenant une boucle de ceinture de sécurité (1) et une languette de boucle (2) qui peut être insérée dans la boucle de ceinture de sécurité (1), un transpondeur RFID (3) étant disposé dans ou sur la languette de boucle (2) et une unité de lecture RFID (4) étant disposée et conçue dans la boucle de ceinture de sécurité (1) de telle sorte qu'un couplage entre l'unité de lecture RFID (4) et le transpondeur RFID (3) n'est possible que lorsque la languette de boucle (2) est insérée dans la boucle de ceinture de sécurité (1), **caractérisé en ce que** le transpondeur RFID (3) est disposé dans un boîtier en plastique (8) pour le maintenir sur une platine (5) métallique de la languette de boucle (2) et pour l'espacer de la platine (5).

2. Système de boucle de ceinture de sécurité selon la revendication 1, dans lequel le transpondeur RFID (3) est disposé dans ou sur la languette de boucle (2) et l'unité de lecture RFID (4) est disposée et conçue dans la boucle de ceinture de sécurité (1) de telle sorte qu'un couplage entre l'unité de lecture RFID (4) et le transpondeur RFID (3) n'est possible que lorsque la languette de boucle (2) est insérée dans la boucle de ceinture de sécurité (1) avec une orientation définie par la disposition du transpondeur RFID (3).

3. Système de boucle de ceinture de sécurité selon la revendication 1 ou 2, dans lequel le transpondeur RFID (3) est disposé dans ou sur une section de la languette de boucle (2) qui peut être insérée dans la boucle de ceinture de sécurité (1).

4. Système de boucle de ceinture de sécurité selon la revendication 3, dans lequel le transpondeur RFID (3) est disposé dans ou sur une platine (5) métallique de la languette de boucle (2), en particulier dans un trou borgne formé dans la platine (5).

5. Système de boucle de ceinture de sécurité selon la revendication 3, dans lequel le transpondeur RFID (3) est disposé dans ou sur une section d'un surmoulage en plastique (6) de la languette de boucle (2), laquelle section s'étend dans la boucle de ceinture de sécurité (1) à l'état inséré.

6. Système de boucle de ceinture de sécurité selon l'une des revendications précédentes, dans lequel le boîtier (8) peut être fixé à la platine (5) à force et/ou par complémentarité de forme, en particulier au moyen d'une liaison par encliquetage.

7. Système de boucle de ceinture de sécurité selon l'une des revendications précédentes, dans lequel le boîtier (8) est au moins partiellement surmoulé par un surmoulage en plastique (6) de la languette de boucle (2).

8. Système de boucle de ceinture de sécurité selon l'une des revendications précédentes, dans lequel la puissance d'émission de l'unité de lecture RFID (4) est si faible qu'un couplage avec le transpondeur RFID (3) n'est possible qu'à une distance allant jusqu'à 3 cm.

9. Système de boucle de ceinture de sécurité selon l'une des revendications précédentes, dans lequel la boucle de ceinture de sécurité (1) est conçue de telle sorte que le rayonnement émis par l'unité de lecture RFID (4) ou le transpondeur RFID (3) est au moins affaibli dans au moins une direction, de telle sorte que, lorsque la languette de boucle (2) est maintenue sur la boucle de ceinture de sécurité (1) de l'extérieur, un couplage du transpondeur RFID (3) et de l'unité de lecture RFID (4) n'est pas possible.

10. Système de boucle de ceinture de sécurité selon la revendication 9, dans lequel au moins une plaque de protection est disposée dans la boucle de ceinture de sécurité (1).

11. Système de boucle de ceinture de sécurité selon l'une des revendications précédentes, dans lequel l'unité de lecture RFID (4) délivre un signal discret lorsqu'elle est couplée au transpondeur RFID (3).

12. Système de boucle de ceinture de sécurité selon l'une des revendications 1 à 10, dans lequel l'unité de lecture RFID (4) peut être connectée à un système BUS côté véhicule.

13. Système de boucle de ceinture de sécurité selon l'une des revendications précédentes, dans lequel aucun interrupteur ou capteur supplémentaire n'est prévu pour détecter la languette de boucle (2) insérée dans la boucle de ceinture de sécurité (1).
